# EUROPEAN PATENT SPECIFICATION

(11) **EP 3 488 044 B1**
(45) Date of publication and mention of the grant of the patent: **06.09.2023**
(21) Application number: 17758620.3
(22) Date of filing: 18.07.2017
(51) Int. Cl.: D06M 15/61, D06M 15/356, C08J 5/04, C08J 5/06, D06M 10/10

(54) **COMPOSITE CARBON FIBERS**
VERBUNDKOHLENSTOFFFASERN
FIBRES DE CARBONE COMPOSITES

(30) Priority: 19.07.2016 US 201615213564
(43) Date of publication of application: 29.05.2019
(73) Proprietor: Hexcel Corporation, Stamford, CT 06901 (US)
(72) Inventor: YURCHENKO, Michael, Decatur, AL 35603 (US)
(74) Representative: TLIP Limited
(86) International application number: PCT/IB2017/054336
(87) International publication number: WO 2018/015883

(56) References cited:
- CN-B- 104 195 835
- US-A- 4 844 781
- US-A1- 2002 144 912
- US-A1- 2013 224 470

## Description

### FIELD

The present invention relates generally to carbon fibers for use in the preparation of fiber reinforced composites, and in particular, to a composite carbon fiber comprising a carbon fiber having an amine-functionalized polymer electro-grafted onto a surface thereof.

### BACKGROUND

Fiber reinforced composites are increasingly being used in a wide variety of applications due to their relative low weight and high strength. An example of one such application is the aviation industry where there is a desire to improve fuel efficiency by reducing vehicle weight. Fiber reinforced composite structures provide a material having a lower density than a corresponding structure comprising a metallic alloy while retaining mechanical properties comparable with steel and aluminum.

Generally, fiber reinforced composites comprise a resin matrix that is reinforced with a fibers, such as carbon fibers. The fiber reinforced composites are typically prepared in a process in which a fabric or tow comprising fibers is impregnated with the resin to form a so called prepreg. The term prepreg is commonly used to describe a reinforced composite comprising fibers that are impregnated with a resin, and that is in an uncured or partially cured state. The prepreg can then be molded into a final or semifinal molded part by subjecting the prepreg to conditions sufficient to cure the resin. Typically, curing takes place by heating the prepreg in a mold at a sufficient temperature and for a sufficient amount of time to cure the resin. Epoxy resins are commonly used in the productions of fiber reinforced composites.

Adhesion of the carbon fibers to the resin matrix is of critical importance in maintaining the mechanical strength of the part, and to prevent delamination of the fiber-carbon interface. To improve adhesion, the carbon fibers are typically treated with a surface treatment prior to impregnation with the resin. A common surface treatment method involves pulling the carbon fiber through an electrochemical or electrolytic bath that contains solutions, such as ammonium bicarbonate, and applying potential, which results anodic oxidation of the carbon fiber surface. Such treatments etches or roughens the surface of each filament, which increases the surface area available for interfacial fiber/matrix bonding. The increase in fiber surface area helps to mechanically interlock the resin matrix to the fiber. In addition, the surface treatment may also oxidize the surface of the fibers, which results in the formation of reactive chemical groups, such as carboxylic acids, on the surface of the fibers.

There are however some disadvantages which may be associated with the surface treatment. For example, in some circumstances the surface treatment may result in undesirable deterioration of the fibers, which results in a practical limitation on how much surface treatment to which the carbon fiber may be subjected. As a result, the surface treatment may not adequately provide the desired level of reactive chemical groups on the surface of the fibers.

Accordingly, there still exists a need for improved carbon fibers and methods of preparing same.

### SUMMARY

Embodiments of the invention are directed to amine functionalized carbon fibers, and to processes for preparing amine functionalized carbon fibers. Additional aspects of the invention are directed to reinforced composites comprising a resin matrix and the amine functionalized fibers, and to processes of making such reinforced composites.

In one embodiment, aspects of the present invention are directed to a composite carbon fiber comprising a carbon fiber having an amine-functionalized polymer electro-grafted onto a surface thereof. The inventor has discovered that by electro-grafting amine functionalized polymers onto a carbon fiber surface, a fiber reinforced composite having improved interlaminar properties can be prepared.

Embodiments of the present invention may provide composite carbon fibers comprising a carbon fiber having an amine-functionalized polymer electro-grafted onto a surface thereof. In one embodiment, the composite carbon fiber has a nitrogen/carbon (N/C) ratio that is at least 0.125, and in particular, a N/C ratio that is from about 0.15 to 0.3, and even more particularly, a N/C ratio that is from about 0.15 to 0.2. In one embodiment, the composite carbon fiber has a N/C ratio that is at least 0.150, such as a N/C ratio that is from about 0.15 to 0.3.

In one embodiment, the composite carbon fiber exhibits an increase in nitrogen surface concentration that is at least 50%, at least 75%, at least 100%, at least 125%, at least 150%, at least 175%, at least 200%, or at least 250% in comparison to the original carbon fiber that does not include an amine-functionalized polymer electro-grafted onto the surface of the carbon fiber. In one particular embodiment, the composite carbon fiber exhibits an increase in nitrogen surface concentration that is at least 495%, in comparison to the original carbon fiber that does not include an amine-functionalized polymer electro-grafted onto the surface of the carbon fiber.

In some embodiments, the composite carbon fiber exhibits an increase in nitrogen surface concentration that is from about 50 to 500% in comparison to the original carbon fiber that does not include an amine-functionalized polymer electro-grafted onto the surface of the carbon fiber. For example, in one embodiment, the composite carbon fiber may exhibit an increase in nitrogen surface concentration that is from about 100 to 500% in comparison to the original carbon fiber that does not include an amine-functionalized polymer electro-grafted onto the surface of the carbon fiber. In other embodiments, the composite carbon fiber the composite carbon fiber exhibits an increase in nitrogen surface concentration that is from about 150 to 500% in comparison to the original carbon fiber that does not include an amine-functionalized polymer electro-grafted onto the surface of the carbon fiber. In still yet another embodiment, the composite carbon fiber may exhibit an increase in nitrogen surface concentration that is from about 100 to 250%, such as from about 125 to 200%, in comparison to the original carbon fiber that does not include an amine-functionalized polymer electro-grafted onto the surface of the carbon fiber.

In one embodiment, the amine-functionalized polymer is selected from the group consisting of linear polyethyleneimines (PEI), branched polyethyleneimines (PEI), branched polypropyleneimine, linear poly(allylamine) (PAA), polyamidoamine (PAMAM) dendrimer, branched poly(allylamine) prepared by branching of poly(allylamine) with divinylbenzene (PAADVB), and block-copolymers, core-shell particles, and combinations thereof. In a preferred embodiment, the amine-functionalized polymer comprises a branched polyethyleneimine.

Preferably, the amine-functionalized polymer has a weight average molecular weight ranging from about 5,000 to 35,000.

A wide variety of different carbon fibers may be used in accordance with the present invention. In one embodiment, the carbon fiber may have a tensile strength of at least 400 ksi. For example, the carbon fiber for preparing the composite carbon fiber may have a tensile strength from about 4136.8 to 7239.5 MPa (600 to 1,050 ksi).

The composite carbon fiber in accordance with the present invention may be used to prepare a variety of different articles. For example, the composite carbon fiber may be used to prepare a fiber reinforced composite, such as prepreg, or a structural element formed from a prepreg.

In one embodiment, the present invention may provide a fiber reinforced composite comprising a carbon fiber having an amine-functionalized polymer electro-grafted onto a surface thereof, and a resin matrix infused into the carbon fiber. In one such embodiment, the fiber reinforced composite may exhibit an interlaminar strength of about 117.2 to 172.4 MPa (17 to 25 ksi) as characterized by Short Beam Shear (SBS) testing. In some embodiments, the interlaminar strength of the fiber reinforced composite is 137.9 to 151.7 MPa (20 to 22 ksi) as characterized by SBS.

In one embodiment, the present invention may provide a fiber reinforced composite exhibiting an increase in SBS ranging from about 5 to 25% in comparison to a similar fiber reinforced composite in which the carbon fibers are identical with the exception that the surfaces of the carbon fibers do not include an amine-functionalized polymer.

In one embodiment, the fiber reinforced composite may include a resin selected from the group consisting of epoxy based resins, bismaleimide based resins, cyanate ester based resins, and phenolic based resins.

In one embodiment, the composite carbon fiber for preparing fiber reinforced composites may exhibit an increase in surface of nitrogen concentration of any one or more of least 25%, at least 50%, at least 75%, at least 100%, at least 125%, at least 150%, at least 175%, at least 200%, at least 225%, at least 250%, at least 275%, at least 300%, at least 325%, at least 350%, at least 375%, at least 400%, at least 425%, at least 450%, at least 475%, or at least 500%, in comparison to the original carbon fiber that has not had an amine-functionalized polymer electro-grafted onto its surface. In some embodiments, the composite carbon fiber exhibits for use in the fiber reinforced composite may exhibit an increase in surface of nitrogen concentration ranging from about 50 to 3,000%, such as from about 100 to 500%, from about 150 to 500%, from about 100 to 250%, or from about 125 to 200%, in comparison to the original carbon fiber that has not had an amine-functionalized polymer electro-grafted onto its surface.

In one embodiment, fiber reinforced composites in accordance with embodiments of the present invention may be used in the manufacture of an aerospace part.

Other aspects of the invention are directed to a composite carbon fiber comprising a carbon fiber having an amine-functionalized polymer electro-grafted onto a surface thereof, and wherein the composite carbon fiber is characterized by:
a) a nitrogen/carbon (N/C) ratio that is at least 0.125; and/or
b) an increase in nitrogen surface concentration that is from about 50 to 500% in comparison to the original carbon fiber that does not include an amine-functionalized polymer electro-grafted onto the surface of the carbon fiber. In such embodiments, the composite carbon fiber may exhibit a nitrogen/carbon (N/C) ratio that is from about 0.15 to 0.3, such as from about 0.15 to 0.2, and from about 0.165 to 0.195, and an increase in surface of nitrogen concentration of any one or more of at least 75%, at least 100%, at least 125%, at least 150%, at least 175%, at least 200%, at least 225%, at least 250%, at least 275%, at least 300%, at least 325%, at least 350%, at least 375%, at least 400%, at least 425%, at least 450%, at least 475%, or at least 500%, in comparison to the original carbon fiber that has not had an amine-functionalized polymer electrografted onto its surface.

In one embodiment, the composite carbon fiber in accordance with the preceding paragraph may exhibit an increase in surface of nitrogen concentration ranging from about 50 to 3,000%, such as from about 100 to 500%, from about 150 to 500%, from about 100 to 250%, or from about 125 to 200%, in comparison to the original carbon fiber that has not had an amine-functionalized polymer electro-grafted onto its surface.

In another aspect, embodiments of the invention are directed to a method of preparing a composite carbon fiber comprising:
passing a carbon fiber through a bath comprising an amine-functionalized polymer;
applying an electro-potential to the cell;
electro-grafting the amine-functionalized polymer onto the carbon fiber to produce a composite carbon fiber having an amine-functionalized polymer electro-grafted onto a surface thereof, and wherein the composite carbon fiber is characterized by:
   a) a carbon/nitrogen (N/C) ratio that is at least 0.125; and/or
   b) an increase in nitrogen surface concentration that is from about 50 to 500% in comparison to the original carbon fiber that does not include an amine-functionalized polymer electro-grafted onto the surface of the carbon fiber.

In one aspect of the method, the composite carbon fiber exhibits a nitrogen/carbon (N/C) ratio that is from about 0.15 to 0.3, such as from about 0.15 to 0.2, and from about 0.165 to 0.195.

In another aspect of the method, the composite carbon fiber exhibits an increase in surface of nitrogen concentration of any one or more of at least 75%, at least 100%, at least 125%, at least 150%, at least 175%, at least 200%, at least 225%, at least 250%, at least 275%, at least 300%, at least 325%, at least 350%, at least 375%, at least 400%, at least 425%, at least 450%, at least 475%, or at least 500%, in comparison to the original carbon fiber that has not had an amine-functionalized polymer electro-grafted onto its surface.

In one embodiment of the method of making the composite carbon fibers, the composite carbon fiber may exhibit an increase in surface of nitrogen concentration ranging from about 50 to 3,000%, such as from about 100 to 500%, from about 150 to 500%, from about 100 to 250%, or from about 125 to 200%, in comparison to the original carbon fiber that has not had an amine-functionalized polymer electro-grafted onto its surface.

In one embodiment of the method of making a composite carbon fiber, the amine-functionalized polymer is selected from the group consisting of linear polyethyleneimines (PEI), branched polyethyleneimines (PEI), branched polypropyleneimine, linear poly(allylamine) (PAA), polyamidoamine (PAMAM) dendrimer, branched poly(allylamine) prepared by branching of poly(allylamine) with divinylbenzene (PAADVB), and a combination thereof. In a preferred embodiment, the amine-functionalized polymer comprises a branched polyethyleneimine.

In one embodiment, the amine-functionalized polymer has a weight average molecular weight ranging from about 5,000 to 35,000.

Advantageously, the steps of electrografting the amine-functionalize polymer to the surface of the carbon fiber may be completed in a relatively short period of time. For example, in one embodiment, the step of electro-grafting the amine-functionalized polymer onto the carbon fiber may take a period of time that lasts between 30 seconds and two minutes, and in particular, for a period of time that lasts between 45 seconds and 90 seconds, and in particular, about 60 seconds.

Embodiments of the invention may be directed to composite carbon fibers, and molded parts prepared therefrom. The invention also covers methods of preparing the composite carbon fibers, and methods of preparing a fiber reinforced composite that incorporates the composite carbon fibers.

### BRIEF DESCRIPTION OF THE DRAWINGS

Reference will now be made to the accompanying drawing, which is not necessarily drawn to scale, and wherein:

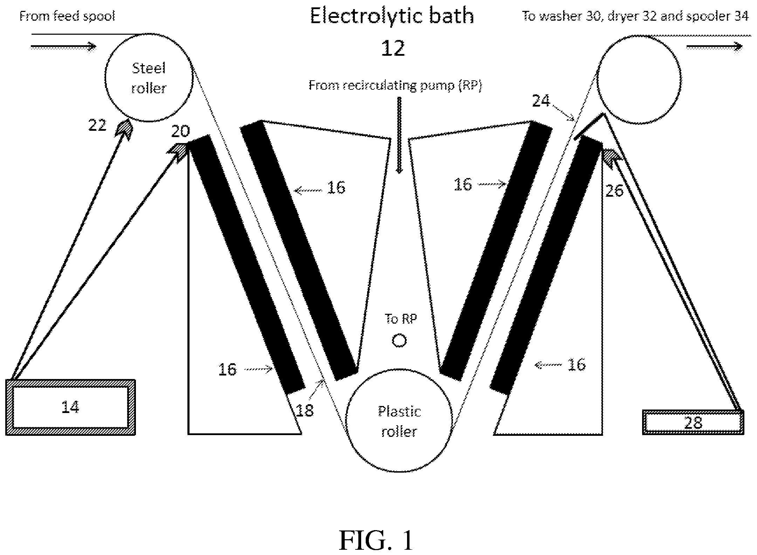

FIG. 1 is a schematic illustration of a system for electro-grafting an amine-functionalized polymer onto a carbon fiber.

### DETAILED DESCRIPTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements.

The terms "first," "second," and the like, "primary," "exemplary," "secondary," and the like, do not denote any order, quantity, or importance, but rather are used to distinguish one element from another. Further, the terms "a," "an," and "the" do not denote a limitation of quantity, but rather denote the presence of "at least one" of the referenced item.

Each embodiment disclosed herein is contemplated as being applicable to each of the other disclosed embodiments. All combinations and sub-combinations of the various elements described herein are within the scope of the invention.

It is understood that where a parameter range is provided, all integers within that range, and tenths and hundredths thereof, are also provided by the invention. For example, "5-10%" includes 5%, 6%, 7%, 8%, 9%, and 10%; 5.0%, 5.1%, 5.2%....9.8%, 9.9%, and 10.0%; and 5.00%, 5.01%, 5.02%....9.98%, 9.99%, and 10.00%.

As used herein, "about" in the context of a numerical value or range means ±10% of the numerical value or range recited or claimed.

In one aspect, embodiments of the present invention provide a composite carbon fiber comprising a carbon fiber having an amine-functionalized polymer electro-grafted onto a surface thereof. As explained in greater detail below, electro-grafting the amine-functionalized polymer onto the surface of the carbon fiber results in a composite carbon fiber in which the polymer is covalently bonded to the fiber, and in which a significant number of reactive amine groups are available for subsequent reactions, such as for reacting with a resin matrix in the production of a fiber reinforced composite. As a result, the composite carbon fibers may be particularly useful in producing fibers reinforced composites that exhibit improved interlaminar strength.

Composite carbon fibers in accordance with the present invention may be used in a wide variety of applications where a fiber reinforced composite having high interlaminar strength as characterized by Short Beam Shear (SBS) testing is desired. Although the composite carbon fibers may be used alone, the composite carbon fibers are generally combined with a resin to form a fiber reinforced composite material. The fiber reinforced composite materials may be in the form of a prepreg or cured final part. Although the fiber reinforced composite materials may be used for any intended purpose, they are preferably used in aerospace applications for both structural and non-structural parts.

For example, the composite carbon fibers may be used to form fiber reinforced composite materials that are used in structural parts of the aircraft, such as fuselages, wings and tail assemblies. The composite carbon fibers may also be used to make composite material parts that are used in non-structural areas of the airplane. Exemplary non-structural exterior parts include engine nacelles and aircraft skins. Exemplary interior parts include the aircraft galley and lavatory structures, as well as window frames, floor panels, overhead storage bins, wall partitions, wardrobes, ducts, ceiling panels and interior sidewalls.

As noted previously, the composite carbon fibers provide a large number of reactive amine groups that are available for subsequent reactions. The presence of the available reactive amine groups on the composite carbon fiber may be characterized by the carbon/nitrogen (N/C) ratio of the composite carbon fibers. For example, composite carbon fibers in accordance with the present invention typically exhibit a nitrogen/carbon (N/C) ratio that is at least 0.125, and more typically, a N/C ratio that is at least 0.150. In one embodiment, the composite carbon fiber has a N/C ratio that is from about 0.15 to 0.3, such as from about 0.15 to 0.2, and from about 0.165 to 0.195. In some embodiments, the composite carbon may have a N/C ratio that is at least 0.120, such as from 0.120 to 0.200. The N/C ratio of the composite carbon fibers may be determined using analytic methods that are known in the art, such as X-ray photoelectron spectroscopy (XPS).

Composite carbon fibers in accordance with embodiments of the present invention may also exhibit increases in surface nitrogen concentration in comparison to an identical carbon fiber (e.g., in comparison to the original carbon fiber prior to electro-grafting of the amine∼ functionalized polymer) that does not include an amine-functionalized polymer electro-grafted to its surface. For example, composite carbon fibers in accordance with embodiments of the invention may exhibit an increase in nitrogen surface concentration of at least 25% in comparison to an identical carbon fiber that has not had an amine-functionalized polymer electro-grafted onto its surface.

More particularly, the composite carbon fibers may exhibit increases in nitrogen surface concentration of at least 25%, at least 50%, at least 75%, at least 100%, at least 125%, at least 150%, at least 175%, at least 200%, at least 225%, at least 250%, at least 275%, at least 300%, at least 325%, at least 350%, at least 375%, at least 400%, at least 425%, at least 450%, at least 475%, and at least 500%, in comparison to an identical carbon fiber that has not had an amine-functionalized polymer electro-grafted onto its surface.

In one embodiment, the composite carbon fiber may exhibit an increase in nitrogen surface concentration ranging from about 50 to 5,000% in comparison to an identical carbon fiber that has not had an amine-functionalized polymer electro-grafted onto its surface. Preferably, the composite carbon fiber exhibits an increase in nitrogen surface concentration ranging from about 50 to 500%, and more preferably, from about 100 to 500%, and even more preferably, from about 150 to 500%, in comparison to an identical carbon fiber that has not had an amine-functionalized polymer electro-grafted onto its surface. In other embodiments, the composite carbon fiber may exhibit an increase in nitrogen surface concentration ranging from about 100 to 250%, and more typically, from about 125 to 200%, and even more typically, from about 150 to 200%, in comparison to an identical carbon fiber that has not had an amine-functionalized polymer electrografted onto its surface. The surface nitrogen concentration of the composite carbon fibers may also be determined using analytic methods that are known in the art, such as X-ray photoelectron spectroscopy (XPS).

In addition, fiber reinforced composites prepared from the composite carbon fibers may exhibit improved interlaminar strength. In one embodiment, fiber reinforced composites in accordance with embodiments of the present invention may exhibit increases in SBS ranging from about 5 to 25% in comparison to a similar fiber reinforced composite in which the carbon fibers are identical with the exception that the surfaces of the carbon fibers have not been modified to include an amine-functionalized polymer (hereinafter referred to as a "non-grafted carbon fiber"). Preferably, the fiber reinforced composites exhibit increases in SBS ranging from about 7 to 25%, and more preferably, from about 10 to 25% in comparison to a composite comprising a non-grafted carbon fiber. In one embodiment, the fiber reinforced composites may exhibit increases in SBS ranging from about 15 to 25% in comparison to a composite comprising a non-grafted carbon fiber.

In one embodiment, the fiber reinforced composites prepared from the composite carbon fibers exhibit an interlaminar strength that is from 117.2 to 172.4 MPa (17 to 25 ksi) as characterized by SBS, and in particular, from 124.1 to 165.5 MPa (18 to 24 ksi) and more particularly, from about 137.9 to 151.7 MPa (20 to 22 ksi)

Composite carbon fibers in accordance with aspects of the invention may be prepared by immersing the carbon fiber through a bath solution comprising the amine-functionalized polymer. The bath may be aqueous or non-aqueous, and may include one or more electrolytes.

Examples of suitable non-aqueous solvents may include methanol, ethanol, dimethylformamide, dimethylsulfoxide, sulfolane, tetrahydrofuran, and acetonitrile, among others.

Examples of suitable electrolytes may include tetraethylammonium tetrafluoroborate, tetrabutylammonium tetrafluoroborate, tetraethylammonium hexafluorophosphate, tetrabutylammonium hexafluorophosphate, tetrabutylphosphonium hexafluorophosphate, tetraethylammonium perchlorate, tetrabutylammonium perchlorate, tetraethylammonium trifluoromethanesulfonate, tetrabutylammonium trifluoromethanesulfonate, lithium perchlorate, lithium hexafluorophosphate, lithium tetrafluoroborate, lithium triflate, lithium bis(trifluoromethanesulfonyl)-imide, and lithium bis(trifluoroethanesulfonyl)imide, among others.

The concentration of the electrolyte in the bath may range from about 0.01 to 1 M, based on the total volume of the electrolyte solution in the bath. In one embodiment, the amount of the electrolyte in the bath is from about 0.01 to 0.5 M, and in particular, from about 0.015 to 0.1 M, and more particularly, from about 0.02 to 0.05 M.

The concentration of the amine-functionalized polymer in the bath may range from about 0.5 to 5 weight percent, based on the total weight of the bath. In one embodiment, the amount of the amine-functionalized polymer in the bath is from about 0.5 to 2.5 weight percent, and in particular, from about 0.75 to 2 weight percent, and more particularly, from about 1.0 to 2.0 weight percent.

In FIG. 1, a system for electro-grafting an amine-functionalized polymer onto a carbon fiber is shown. The system includes an electrolytic bath 12, a power source 14, a cathode 16, and a carbon fiber 18. The power source 14 is connected to the cathode(s) 16 via a lead 20, and to the carbon fiber 18 via a lead 22. The system may also include one or more TEFLON^{®} coated pulleys over which the carbon fiber is directed. The system may also include a pump (not shown) to recirculate the bath solution. After the carbon fiber is drawn through the bath, it is directed to wash station (washer) 30 where the fiber is rinsed with deionized water. The composite fiber may then be passed through a dryer 32, and then wound on an uptake spooler 34 for later use. In some embodiments, the bath may also include a reference electrode 24 that is connected to a voltmeter (e.g., digital multimeter) 28, which in turn may be connected to a cathode 16 via lead 26.

The carbon fiber may be exposed to the bath for a period of time from about 30 seconds to 5 minutes. Advantageously, it has been discovered that the amine-functionalized polymer may be electro-grafted onto the carbon fiber in an exposure time ranging from about 1 to 2 minutes, and in particular, about 1 minute.

The applied voltage typically ranges from about 0.1 to 10 volts with a voltage from about 0.5 to 5 volts being preferred.

A wide variety of amine-functionalized polymers may be used in embodiments of the invention. Preferably, the amine-functionalized polymers include a plurality of amine groups distributed along the backbone or branches of the polymer that are available for being electrografting to the carbon fiber surface or are available for subsequent reactions with a resin matrix. For example, in a preferred embodiment the amine-functionalized polymer includes a plurality of pendant, terminal primary, secondary, tertiary, amino-groups, or mixtures thereof that are incorporated into polymer structure.

In one embodiment, the amine-functionalized polymer comprises a polymer of formulas (I) and (II):

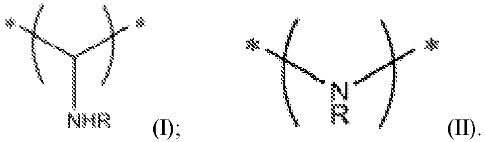

In formulas (I) and (II), the R group may independently represent a hydrogen, a linear, branched, cyclic or alkyl group (saturated or unsaturated), aliphatic group, aromatic group, or mixture thereof. In some embodiments, R in addition to the abovementioned groups may also include ethoxylated segments, heterocyclic compounds, and heteroatoms.

In some embodiments, R may also comprise an amine protecting groups, such as a carbobenzyloxy, methoxybenzyl carbonyl, tert-Butyloxycarbonyl, 9-fluorenylmethyloxycarbonyl, acetyl, benzoyl, benzyl, carbamate, methoxybenzyl, 3,4- dimethoxybenzyl, p-methoxyphenyl, tosyl, and sulfonamides.

In a preferred embodiment, the amine-functionalized polymer comprise a carbon (e.g., organic) based polymer back-bone, such a back-bone comprising hydrocarbon-based moieties which may be aromatic or aliphatic (saturated or unsaturated). Such a backbone may be connected via C-C, C-O, C-N, C-S, and N-N bonds. In some embodiments, the back-bone may include hydrocarbon moieties in which heteroatoms, such as O, N, S are incorporated. The aforementioned moieties can be also of heterocyclic nature. In other embodiments, the back-bone of the amine-functionalized polymer may be derived from siloxane based polymers. The backbone may be crosslinked or substantially free of crosslinks.

In general, it may be desirable for the amine-functionalized polymer to have a weight average molecular weight (Mw) that is greater than about 2,000, and in particular, greater than about 2,500. While there is no general practical limit on the Mw of the amine-functionalized polymer, the polymer may have a Mw ranging from about 5,000 to 1,000,000, with a Mw ranging from about 15,000 to 750,000 being somewhat more typical, and a Mw ranging from about 15,000 to 100,000 being even more typical. As is known in the art, the Mw of a polymer may be determined with static light scattering techniques.

In one embodiment, the amine-functionalized polymer is selected from the group consisting of linear polyethyleneimines (PEI), branched polyethyleneimines (PEI), branched polypropyleneimine, and linear poly(allylamine) (PAA), branched poly(allylamine) prepared by branching of poly(allylamine) with divinylbenzene (PAADVB), and mixtures thereof. In a preferred embodiment, the amine-functionalized polymer is a branched polyethyleneimine.

In one embodiment, the amino-functionalized polymer may comprise a copolymer. For example, the amine-functionalized polymer may comprise a polymer structure that is derived from a mix of monomers that contain an amine function and monomers which do not. Examples of such a copolymers include block copolymers and core-shell particles derived from such copolymers. Both block copolymers (see, for example, U.S. Patent Number 6,894,113) and core-shell particles (see, for example, EP 1632533A1, U.S. Patent Publication No 2008/0251203 A1, EP 2123711A, EP 2135909A1, and EP 2256163A1) are extensively described in literature as toughening additives to epoxy-based resins. One of the most interesting and relevant example of such copolymers and core-shell particles that are described in literature by Berg et al. (Nguyen, F.; Saks, A.; Berg, J.C. J. Adhesion Sci. Technol. 2007, 21, pp. 1375-1393; Leonard, G.C.; Hosseinpour, D.; Berg, J.C. J. Adhesion Sci. Technol. 2009, 23, pp. 2031-2046.), where the outershell is comprised of polyethyleneimine polymerized onto a core particle made of polystyrene.

In one embodiment the amine-functionalized polymer can be based on polysiloxane polymeric back-bone. One of the examples of such polymers can be found in WO2004/035675A1 where authors described preparation of sol gel particles bearing amine functionality on a surface and a cross-linked polysiloxanes structure as a core.

In one embodiment, the amine-functionalized polymer may comprise a polyamidoamine (PAMAM) dendrimer. PAMAM dendrimers are hyperbranched polymers typically comprising an ethylenediamine core, a repetitive branching amidoamine internal structure and a primary amine surface. The dendrimers are grown off a central core in an iterative process in which each step produces a new generation of dendrimer having approximately twice the number of reactive surface sites, and approximatedly double the molecular weight of the preceding generation. An example of Generation 0 and Genaration 1 for a PAMAM dendrimer is shown below.

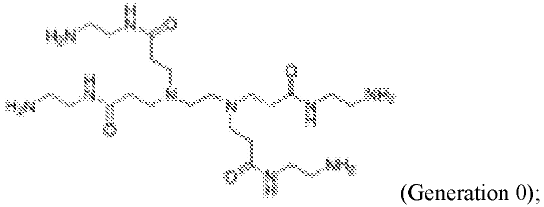

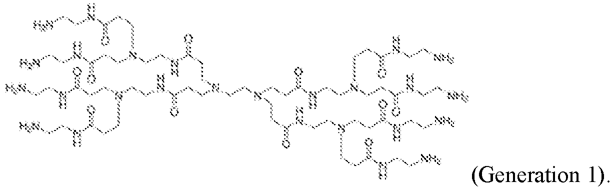

In yet another embodiment, the amine-functionalized polymer may comprise highly branched poly-amido-amines described by Buchman et al. (Dodiuk-Kenig, H.; Buchman, A.; Kenig, S. Composite Interfaces 2004, 11, pp.453-469 and references therein). There the synthesis of highly branched amine-functional polymer is based on amine-epoxy reactions.

In some embodiments, the amine-functionalized polymer may include block-copolymers and core-shell particles. For example, in one embodiment, the amine-functionalized polymer may comprise block-copolymers and core-shell particles of linear polyethyleneimines (PEI), branched polyethyleneimines (PEI), branched polypropyleneimine, and linear poly(allylamine) (PAA), branched poly(allylamine) prepared by branching of poly(allylamine) with divinylbenzene (PAADVB), and combinations thereof.

A wide variety of different carbon fibers may be used in accordance with embodiments of the present invention. In one embodiment, the carbon fiber may be considered aerospace grade carbon and have a tensile strength of at least 400 ksi (2,758 MPa). For example, the carbon fiber may have a tensile strength of at least one of 450 ksi, 500 ksi, 550 ksi, 600, ksi, 650 ksi, 700 ksi, 750 ksi, 800 ksi, 850 ksi, 900 ksi, 950 ksi, and 1,000 ksi. In one embodiment, the carbon fiber may have a tensile strength from about 400 to 1,200 ksi, and in particular from about 600 to 1,050 ksi, and more particularly, from about 700 to 950 ksi.

Preferably, the carbon fibers are arranged in tows. The "tows" (sometimes referred to as "rovings" or simply 'fibers") are multifilament fibers. The number of filaments per tow may be, for example, 100 to 30,000. The tows should be thermally and chemically stable under conditions of prepreg formation (e.g., curing of the matrix resin composition).

Typically the fibers will have a circular or almost circular cross-section with a diameter in the range of from 0.5 to 30 microns, preferably from 2 to 20 microns, and more preferably, from 2 to 15 microns. In terms of weight, the individual tows may have a weight of, for example, 200 to 3,000 g/1000 meters, 600 to 2,000 g/1000 meters, or 750 to 1750 g/1000 meters. In a preferred embodiment, the individual tow may have a weight that is from 200 to 500 g/1,000 meters.

In some embodiments, the carbon fibers may be surface treated prior to electrografting the amine-functionalized polymer onto the fibers. In other embodiments, the carbon fibers may be untreated prior to electro-grafting. Preferably, the carbon fibers are not subjected to any treatment prior to electro-grafting that would reduce the tensile strength of the fibers. For example, in various embodiments the carbon fibers are not subjected to a high temperature treatment in a steam atmosphere, such as at a temperature above 800 °C, or a plasma treatment.

In some embodiments, it may be desirable that the fiber is not sized or at least de-sized prior to attachment of the amine-functionalized polymer to the carbon fiber. In one embodiment, composite carbon fiber may be used as either sized or unsized by formulations known to the ones skilled in art, depending on application.

Examples of suitable carbon fibers include HEXTOW^{®} AS-4, AS-7, IM-7, IM-8, IM-9, and IM-10, and HM-63 carbon fibers, all of which are PAN based continuous fibers available from Hexcel Corporation (Dublin, Calif.). IM-7 through IM-10 are continuous, high performance, intermediate modulus, PAN based carbon fibers available in 12,000 (12K) filament count tows having minimal tensile strengths of 820 ksi, 880 ksi, 890 ksi, and 1,010 ksi, respectively.

Carbon fibers from other carbon manufacturers may also be used in some embodiments of the invention. For example, in some embodiments, suitable carbon fibers may include Aksaca 3K A-38, 6K A-38, 12K A-42, 24K A-42, 12 K A-49 and 24 K A-49 carbon fibers available from Dow Aksa Ileri Kompozit Malzemeler Saai Ltd, Sti, Istanbul, Turkey. These product designations indicate the approximate number of filaments/roving in thousands (3K being 3,000 filaments, for example), and the approximate tensile strength of the fibers in hundreds of MPa (A-38 indicating a tensile strength of 3,800 MPa). Other carbon fibers that may be used in accordance with embodiments of the invention are believed to include T700 and T800, which are available from Toray Industries.

Composite carbon fibers in accordance with embodiments of the invention may be used in a wide variety of reinforcement structures, For example, the composite fibers may arranged to form reinforcing structures that are unidirectional, bidirectional or multidirectional depending on the desired properties required in the final reinforced composite. The composite carbon fibers may be in the form of tows or fabrics and may be in the form of random, knitted, non-woven, multi-axial (e.g., non-crimped fabric), braided or any other suitable pattern.

When unidirectional fiber layers are used, the orientation of the composite fibers may be the same or vary throughout a prepreg stack to form a so called non-crimp fabric (NCF). However, this is only one of many possible orientations for stacks of unidirectional fiber layers. For example, unidirectional fibers in neighboring layers may be arranged orthogonal to each other in a so-called 0/90 arrangement, which signifies the angles between neighboring fiber layers. Other arrangements, such as 0/+45/-45/90 are of course possible, among many other arrangements. In one embodiment, the carbon fibers may comprise a braided or non-crimp fabric having a basis weight from 150 to 2,000 g/m², and in particular from 300 to 1600 g/m².

Prepregs in accordance with embodiments of the present invention may be produced by infusing the carbon fibers or a fabric comprising the carbon fibers with a resin composition, such as an epoxy resin.

A wide variety of different resin compositions may be used in the practice of the invention. Preferably, the resin composition comprises a cross-linkable thermoset system. Suitable examples of the thermoset resins may include epoxy based resins, bismaleimide based resins, cyanate ester based resins, and phenolic based resins. Examples of suitable bismaleimide (BMI) resins that may be used in the invention is available from Hexcel Corporation under the tradename HEXPLY^{®}.

In some embodiments, the resin composition may comprise a thermoplastic resin. Examples of suitable thermoplastic resins may include polyaryletherketones (PAEK), such as polyetheretherketones (PEEK) and Polyetherketoneketones (PEKK), polyamides, such as nylons, polyphenylene sulfides (PPS), polyetherimides (PEI), polyphenylene oxides (PPO), polyether sulfones (PES), polybenzimidazole s(PBI), and polycarbonates (PC).

In one embodiment the resin composition may comprise an epoxy resin composition. Typically, the resin composition may include from 55 to 75 weight percent of an epoxy resin component that includes one or more epoxy resins. The epoxy resins may be selected from any of the epoxy resins that are used in high performance aerospace epoxies. Difunctional, trifunctional and tetrafunctional epoxy resins may be used. In one embodiment, the epoxy resin may be made up substantially of a trifunctional epoxy compound. If desired, tetrafunctional epoxies may be included. The relative amounts of trifunctional and tetrafunctional epoxies may be varied as is known to one of skill in the art.

A trifunctional epoxy resin will be understood as having the three epoxy groups substituted either directly or indirectly in a para or meta orientation on the phenyl ring in the backbone of the compound. A tetrafunctional epoxy resin will be understood as having the four epoxy groups in the backbone of the compound. Suitable substituent groups, by way of example, include hydrogen, hydroxyl, alkyl, alkenyl, alkynyl, alkoxyl, aryl, aryloxyl, aralkyloxyl, aralkyl, halo, nitro, or cyano radicals. Suitable non-epoxy substituent groups may be bonded to the phenyl ring at the para or ortho positions, or bonded at a meta position not occupied by an epoxy group.

Suitable trifunctional epoxy resins, by way of example, include those based upon: phenol and cresol epoxy novolacs; glycidyl ethers of phenol-aldelyde adducts; aromatic epoxy resins; dialiphatic triglycidyl ethers; aliphatic polyglycidyl ethers; epoxidised olefins; brominated resins, aromatic glycidyl amines and glycidyl ethers; heterocyclic glycidyl imidines and amides; glycidyl ethers; fluorinated epoxy resins or any combination thereof. A preferred trifunctional epoxy is the triglycidyl ether of para aminophenol, which is available commercially as Araldite MY 0500 or MY 0510 from Huntsman Advanced Materials (Monthey, Switzerland). A particularly preferred trifunctional epoxy is a triglycidyl ether of meta-aminophenol, which is available commercially from Huntsman Advanced Materials (Monthey, Switzerland) under the trade name Araldite MY0600, and from Sumitomo Chemical Co. (Osaka, Japan) under the trade name ELM-120.

Suitable tetrafunctional epoxy resins, by way of example, include those based upon: phenol and cresol epoxy novolacs; glycidyl ethers of phenol-aldelyde adducts; aromatic epoxy resins; dialiphatic triglycidyl ethers; aliphatic polyglycidyl ethers; epoxidised olefins; brominated resins, aromatic glycidyl amines and glycidyl ethers; heterocyclic glycidyl imidines and amides; glycidyl ethers; fluorinated epoxy resins or any combination thereof. A preferred tetrafunctional epoxy is N,N,N',N'-tetraglycidylmethylenedianiline, which is available commercially as Araldite MY0720 or MY0721 from Huntsman Advance Materials (Monthey, Switzerland).

If desired, the epoxy resin component may also include a difunctional epoxy. such a Bisphenol-A (Bis-A) or Bisphenol-F (Bis-F) epoxy resin.

Examples of suitable epoxy resins may include the diglycidyl ethers of polyhydric phenol compounds such as resorcinol, catechol, hydroquinone, bisphenol, bisphenol A, bisphenol AP (1,1-bis(4-hydroxylphenyl)-1-phenyl ethane), bisphenol F, bisphenol K, bisphenol M, tetramethylbiphenol, diglycidyl ethers of aliphatic glycols and polyether glycols such as the diglycidyl ethers of C₂₋₂₄ alkylene glycols and polyethylene oxide) or polypropylene oxide) glycols; polyglycidyl ethers of phenol-formaldehyde novolac resins, alkyl substituted phenol-formaldehyde resins (epoxy novalac resins), phenol-hydroxybenzaldehyde resins, cresolhydroxybenzaldehyde resins, dicyclopentadiene-phenol resins and dicyclopentadiene-substituted phenol resins, and any combination thereof.

Suitable diglycidyl ethers include diglycidyl ethers of bisphenol A resins such as are sold by The Dow Chemical Company under the designations D.E.R.^{®} 330, D.E.R.^{®} 331, D.E.R.^{®} 332, D.E.R.^{®} 383, D.E.R.^{®} 661 and D.E.R.^{®} 662 resins, and as Araldite GY6010 (Huntsman Advanced Materials). Exemplary Bis-F epoxy resin is available commercially as Araldite GY281 and GY285 (Huntsman Advanced Materials).

Commercially available diglycidyl ethers of polyglycols include those sold as D.E.R.^{®} 732 and D.E.R.^{®} 736 by Dow Chemical.

Epoxy novolac resins may also be used. Such resins are available commercially as D.E.N.^{®} 354, D.E.N.^{®} 431, D.E.N.^{®} 438 and D.E.N.^{®} 439 from The Dow Chemical Company

The epoxy resin component may optionally include from 5 to 20 weight percent of a thermoplastic toughening agent. Thermoplastic toughening agents are well-known for use in preparing high performance epoxy resins. Exemplary toughening agents include polyether sulfone (PES), polyetherimide (PEI), polyamide (PA) and polyamideimide (PAI). PES is available commercially from a variety of chemical manufacturers. As an example, PES is available from Sumitomo Chemical Co. Ltd. (Osaka, Japan) under the tradename Sumikaexcel 5003p. Polyetherimide is available commercially as ULTEM 1000P from Sabic (Dubai). Polyamideimide is available commercially as TORLON 4000TF from Solvay Advanced Polymers (Alpharetta, Ga.). The thermoplastic component is preferably supplied as a powder that is mixed in with the epoxy resin component prior to addition of the curative agent.

The epoxy resin composition may also include additional ingredients, such as performance enhancing and/or modifying agents. The performance enhancing or modifying agents, for example, may be selected from: flexibilizers, particulate fillers, nanoparticles, core/shell rubber particles, flame retardants, wetting agents, pigments/dyes, conducting particles, and viscosity modifiers.

In some embodiments, the infusion process may be carried out at an elevated temperature so that the viscosity of the resin composition is further reduced. However it must not be so hot for sufficient length of time that an undesirable level of curing of the resin composition occurs.

In a preferred embodiment of the invention, the infusion/impregnation of the resin composition into the carbon fibers is carried out at temperatures sufficient for the resin to flow into and between the fibers. For example, the infusion temperature of the resin composition may be in the range of from 100 to 200 °C, with a range of 120 to 180 °C, and in particular, a temperature of about 150 °C being more preferred. It should be recognized that temperature ranges outside the above ranges may also be used. However, the use of higher or lower infusion temperatures typically requires adjusting the machine speed at which the infusion process is carried out. For example, at temperatures greater than about 175 °C, it may be necessary to carry out the infusion process at a higher machine speed in order to reduce the duration of time to which the resin composition is exposed to an elevated temperature to avoid undesirable crosslinking of the resin composition.

Similarly, to obtain a desired level of infusion and thereby decrease void spaces in the prepreg, the use of lower infusion temperatures will typically require a lower machine speed for infusing the epoxy resin composition into the fibrous material.

Typically the resin composition will be applied to the carbon fibers at a temperature in this range and consolidated into the fibers by pressure, such as that exerted by passage through one or more pairs of nip rollers.

A further aspect of the invention is directed to a process of preparing prepregs in accordance with embodiments of the invention. In a first step, the epoxy resin composition is extruded onto a sheet material to form a thin film coating thereon. The sheet material comprises a release film or paper from which the film coating of the epoxy resin composition may be transferred to the fibrous material during the prepregging process. After the film of the epoxy resin composition has been deposited on the sheet material, the sheet material with the film coating may be passed over a chill roll to cool the epoxy resin composition. The sheet material is then typically wound on a roll for future use.

### EXAMPLES

### Test Methods

### X-ray photoelectron spectroscopy (XPS)

XPS analysis of carbon fiber samples was performed on instrument PHI 5701LSci with X-ray source of monochromated Al kα 1486.6eV, with acceptance angle ±7° and take-off angle of 50°. Analysis area was 2 mm x 0.8 mm. Resulting values were normalized to 100% using the elements detected. Trace elements were not reported.

Test samples were prepared by cutting a 20 cm sample from a spool followed by sonication for 30 minutes in solvent. The solvent was changed to fresh after 15 minutes. The fiber samples were dried at 80°C at reduced pressure overnight.

### Tensile Strength

Tensile strengths of the carbon fiber samples were measured in accordance with the procedures set forth in ASTM D-4018.

### Short Beam Shear (SBS)

Various laminate panels were prepared to evaluate the interlaminar strength of fiber reinforced composites using SBS accordance with ASTM D 2344. Sample widths were 6.35 mm (0.25 inches) ± 0.127 mm (0.005 inches) . 4:1 span to depth ratio was used. Nine replicates were tested per each sample.

Laminate panel samples were prepared using either BMI or epoxy resins. The BMI infused laminates had a basis weight of 190 g/m², and were prepared by laying down 12 plies of the carbon fibers. The epoxy infused laminates had a basis weight of 145 g/m², and were prepared by laying down 16 plies of the carbon fibers. The carbon fibers were laid down by hand or with a tension stand. All plies had 0° orientation and were laid onto BMI or epoxy tapes. The panels were then cut and pressed to form a prepreg. Carbon fiber lengths were approximately 30 meters. The laminates panels were cured according to the following:

Epoxy infused laminate panels were cured in an autoclave using two cycles:
1) cure cycle: the laminate panels were heated to 115.5°C (240°F) which was held for a duration of 65 minutes at a pressure of 0.59 MPa (85 PSI). The panels were then heated to 176.7°C (350°F), and held for a duration of 120 minutes at a pressure of 0.69 MPa (100 PSI). The panels were then cooled to 60°C (140°F) at a rate of 1.67°C per minute (3°F per minute).
2) post cure cycle: The panels were then heated to 176.7°C (350°F), which was held for a duration of 4 hours. The panels were then cooled down to 60°C (140°F).

BMI infuse laminates were similarly cured in an autoclave using two cycles:
1) cure cycle: the laminate panels were heated to 121.1°C (250°F), which was held for a duration of 30 minutes at a pressure of 0.59 MPa (85 PSI). The panels were then heated to 190.5°C (375°F) and held at this temperature for a duration of 250 minutes at pressure of 0.59 MPa (85 PSI). The panels were cooled to 60°C (140°F) at a rate of 1.67°C per minute (3°F per minute ).
2) post cure cycle: The panels were then heated to 240.5°C (465°F), which was held for 6 hours and 30 minutes. The panels were then cooled down to 60°C (140°F).

The materials used in the adhesive compositions are identified below. All percentages are weight percents unless indicated otherwise. All physical property and compositional values are approximate unless indicated otherwise.

"B-PEI-1" refers to a branched polyethyleneimine (having an average Mw of approximately 25,000 and an average Mn of approximately 10,000) available from SIGMA-ALDRICH^{®}.

"B-PEI-2" refers to a branched polyethyleneimine (having an average Mw of approximately 800 and an average Mn of approximately 600) available from SIGMA-ALDRICH^{®}.

"L-PEI" refers to a linear polyethyleneimine (having an average Mw of approximately 2,500), available from Polysciences, Inc.

"PAA" refers to poly(allyl amine) polyethyleneimine (having an average Mw of approximately 15,000), available from Polysciences, Inc.

"TAEA" refers to tris(2-aminoethyl)amine (96%), available from SIGMA-ALDRICH^{®}.

"TEABF" refers to tetraethylammonium tetrafluoroborate (99%), available from SIGMA-ALDRICH^{®}.

"MEOH" refers to methanol (anhydrous), available from SIGMA-ALDRICH^{®}.

Na₂SO₄" refers to sodium sulfate (≥ 99.0%, A.C.S. reagent grade, anhydrous) available from SIGMA-ALDRICH^{®}.

"IM-7" refers to a 100% nominal surface treated PAN based continuous carbon fiber (12,000 (12K) filament count tows having a minimal tensile strength of 820 ksi) available from Hexcel Corporation under the tradename HEXTOW^{®}. The carbon fiber was unsized.

"IM-X" refers to a 5% nominal surface treated PAN based continuous carbon fiber (12,000 (12K) filament count tows having a minimum tensile strength of 825 ksi), prepared by Hexcel Corporation. The carbon fiber was unsized.

"IM-U" refers to a non-surface treated PAN based continuous carbon fiber (12,000 (12K) filament count tows that were prepared by Hexcel Corporation. The carbon fiber was unsized.

"BMI" refers to a bismaleimide resin available from Hexcel Corporation under the name HX1624.

"EPOXY" refers to a proprietary epoxy resin available from Hexcel Corporation.

Composite carbon fibers were prepared in accordance with the following procedures.

A bath similar to the one depicted in FIG. 1 was used to electro-graft the amine-functionalized polymers onto the surface of the carbon fibers. The power supply used in the electro-grafting process was a DC Power Supply 1030 from BK Precision. Carbon cathodes were used in the process. The cathodes had a generally elongated rectangular shape, and were supplied by Americarb (grade AX-50). Dimensions of the cathodes were: 21 cm x 2.5 cm x 1.2 cm. The experiment employed either non-aqueous Ag/Ag+ reference electrodes or aqueous Ag/AgCl reference electrodes. The non-aqueous Ag/Ag+ reference electrodes (CHI 112) were purchased from CH instruments, Austin TX, and were filled with 10 mM silver nitrate and 20 mM supporting electrolyte solutions in organic solvent. The aqueous Ag/AgCl reference electrodes (CHI 112) were purchased from the same source and filled with 1M KCl solution.

Carbon fiber tow was fed from a controlled tension feed spooler over a steel roller. The steel roller was connected to the positive terminus of the power supply. The carbon cathodes were immersed in the bath and connected to the negative terminus of the power supply. The carbon fiber tow fed over a TEFLON^{®} coated roller disposed in the bottom of the bath, and then was passed over a second steel roller outside of the bath. The carbon fiber was then washed with deionized water, dried, and then wound on a take-up spool.

The applied voltage was adjusted so that the potential read by the silver reference electrode placed in a close proximity of the carbon fiber tow was approximately 1.6 Volts. The distance between the cathodes was 2.5 cm and fiber travel path length was 61 cm (2 feet). The bath solution was recirculated by a peristaltic pump and replenished as needed to maintain a constant volume. The duration of the exposure of the carbon fiber to the bath was varied from 1 to 4 minutes depending on the experimental trial.

The volume of the bath was approximately 1 liter. The washing bath employed deionized water and included a multi-path and a multi-roller system with total volume of water of about 2 liters. The washing bath was purged and completely changed over every 30 minutes with fresh deionized water. The dryer was a drying tower which utilized hot air at 125 °C.

In the following Examples, the difference between simple adsorption of the amine-functionalized polymer (B-PEI-1) in comparison to electro-grafting of the same polymer was evaluated. The electro-grafting was performed as described above. The same bath chemistry was used in both the adsorption method and electro-grafting process, with the exception of an electrolyte. The concentration of the B-PEI-1 in the bath was approximately 1.25 weight percent. A B-PEI-1 concentration of 1.25 weight percent was found to generally provide the best results for electrografting. Increases in polymer concentration did not appear to result in nitrogen concentration increase on the fiber surface. The bath was non-aqueous and used MEOH. For electrografting, the bath contained TEABF as a supporting electrolyte. The carbon fiber tows were exposed to the bath for a duration of one to two minutes. The carbon fibers were then evaluated using XPS to determine the carbon (C), nitrogen (N), and oxygen (O) atomic concentration percent. The control carbon fiber tow was not subjected to the bath treatment. The results are summarized in Table 1 below.

**Table 1: Comparison of N/C ratio of electro-grafted carbon fibers vs. adsorption**

| Sample No. | Process | Carbon fiber | Bath exposure time (min.) | C (%) | N (%) | O (%) | N/C ratio |
|---|---|---|---|---|---|---|---|
| Control 1 | - | IM-7 | N/A | 83 | 6.3 | 10.4 | 0.075 |
| Comparative-1 | Adsorption | IM-7 | 2 | 78.7 | 9.5 | 10.9 | 0.121 |
| Comparative-2 | Adsorption | IM-7 | 1 | 82.6 | 6.7 | 9.1 | 0.081 |
| Comparative-2A | Adsorption | IM-7 | 2 | 75.1 | 8.7 | 13.8 | 0.115 |
| Comparative-3 | Adsorption | IM-7 | 2 | 82.2 | 8.2 | 9.1 | 0.099 |
| Example 1 | Electro-graft | IM-7 | 1 | 71.6 | 11.9 | 12.1 | 0.166 |
| Example 2 | Electro-graft | IM-7 | 4 | 70.5 | 13.4 | 12.5 | 0.190 |

The adsorption method, which is also known as the "Wet Chemistry" approach utilizes reactions of organic molecules containing several amine functions with the fiber. Generally, it is believed that amines react with surface functionalities on the carbon fibers, such as carboxylic acids (resulting in salts and/or amides) or others, which results in adsorption of the polymers onto the carbon fibers. From the results in Table 1, it can be seen that the adsorption method results in a significantly lower concentration of amine groups (as evidenced by the nitrogen atomic concentration) on the surface of the composite carbon fibers. Further, it was observed that even though, it was possible to immobilize the B-PEI-1 onto carbon fiber by simple adsorption from organic solution, this type of deposition was highly uneven in many cases. The XPS results were irreproducible, as it is shown in Table 1, some samples showed a nitrogen surface concentration increase of various degrees and some showed relatively none (e.g., Comparative-2) in comparison to the control carbon fiber (Control-1).

In contrast, the electro-grafted carbon fibers were observed to be very reproducible, which implies that the electro-grafting of the B-PEI-1 is much more homogeneous on the carbon fiber surface in comparison to the adsorption approach. It was also established that only half of the time period (1 minute *vs.* 2 minutes) was necessary to introduce nitrogen surface concentration higher than in the best case of adsorbed B-PEI-1.

In the following examples various composite fibers were prepared in which an amine-functionalized polymer was electro-grafted onto a carbon fiber as previously described. The resulting composite carbon fibers were then used to prepare laminate panels as discussed previously.

Example 3: *Electro-grafting of B-PEI-1 onto IM-7 carbon fiber tow.*

A bath comprising a MEOH solution 20mM in tetraethylammonium tetrafluoroborate as a supporting electrolyte (S.E.), and 1.25 wt.% of B-PEI-1 was prepared. The B-PEI-1 was electro-grafted onto IM-7 carbon fiber tow according to the procedure described above. A laminate panel was prepared with the resulting composite carbon fiber and an epoxy resin. The laminate panel was then evaluated for interlaminar strength using SBS testing. The results are summarized in Table 2 below (1 ksi = 6.9 MPa).

**Table 2: Summary of SBS and XPS Data for Electro-grafting of B-PEI-1**

| Sample No. | Carbon fiber | Bath exposure time (min.) | C (%) | O (%) | N (%) | SBS (ksi) |
|---|---|---|---|---|---|---|
| Control-2 | IM-7 | -- | 83.8 | 11.9 | 4.1 | 18.67 ± 0.85 |
| Example 3 | IM-7 | 1 | 77.8 | 8.9 | 12.0 | 20.11 ± 0.43 |

As can be seen in Table 2, the XPS analysis indicated a significant increase in nitrogen surface concentration in comparison to the control fiber (i.e., Control-2). In particular, Table 2 shows that the electro-grafted carbon fiber (Example 3) exhibited an increase of surface nitrogen concentration of 192.7% in comparison to the control carbon fiber. This nitrogen concentration remained unchanged upon prolonged sonication (30 minutes) in methanol, indicating that the B-PEI-1 was covalently bonded to the surface of the carbon fibers. The electro-grafted carbon fiber also contained trace amounts of fluorine and boron from the supporting electrolyte, which was easily removed by sonication.

In addition, the laminate panel prepared from the composite carbon fiber also exhibited improved interlaminar strength as evidenced by the SBS results shown in Table 2. As can be seen, laminates prepared from the composite carbon fiber in Example 3 showed an increase of more than 7% in interlaminar strength over the control fiber.

Example 4: *Electro-grafting of branched PEI onto IM-7 12K fiber tow and SBS evaluation of laminates prepared with BMI resin.*

In this example, a laminate panel was prepared with the composite carbon fiber of Example 3 and BMI resin. As in Example 3, above the panel was evaluated with SBS. The results are summarized in Table 3 below (1 ksi = 6.9 MPa).

**Table 3: Summary of SBS and XPS Data for Electro-grafting of BMI**

| Sample No. | Carbon fiber | Bath exposure time (min.) | C (%) | O (%) | N (%) | SBS (ksi) |
|---|---|---|---|---|---|---|
| Control-3 | IM-7 | -- | 83.8 | 11.9 | 4.1 | 18.33 ± 0.31 |
| Example 4 | IM-7 | 1 | 77.8 | 8.9 | 12.0 | 16.69± 0.21 |

As in Example 4, laminates prepared with the composite carbon fiber showed improvements in interlaminar strength in comparison to the laminates prepared from the control carbon fiber. Laminates prepared from the composite carbon fiber in Example 3 showed an increase of nearly 10% in interlaminar strength in comparison to the control fiber.

Comparative Examples 4 and 5: Electro-grafting *of tris(2-aminoethyl)amine (TAEA) onto IM-7 12K fiber tow and SBS evaluation of laminates prepared with EPOXY resin.*

In Comparative Examples 4 and 5, TAEA was grafted onto the surface of the carbon fiber to produce a composite carbon fiber. Laminate panels were then prepared with EPOXY resin (Comparative Example 4) or BMI resin (Comparative Example 5) and evaluated with SBS. A bath comprising a MEOH solution 20mM in tetraethylammonium tetrafluoroborate as a supporting electrolyte (S.E.), and 1.25 wt.% of TAEA was prepared. The TAEA was electro-grafted onto IM-7 carbon fiber tow according to the procedure described above. The composite carbon fibers were also evaluated with XPS.

**Table 4: Summary of SBS and XPS Data for Electro-grafting of TAEA (1 ksi = 6.9 MPa)**

| Sample No. | Carbon fiber | Bath exposure time (min.) | C(%) | O (%) | N (%) | SBS (ksi) |
|---|---|---|---|---|---|---|
| Control-4 | IM-7 | -- | 83.8 | 11.9 | 4.1 | 18.67 ± 0.85 |
| Comparative Example 4 | IM-7 | 1 | 82.0 | 10.5 | 7.2 | 18.71 ± 0.84 |
| Control-5 | IM-7 | -- | 83.8 | 11.9 | 4.1 | 16.69 ± 0.21 |
| Comparative Example 5 | IM-7 | 1 | 82.0 | 10.5 | 7.2 | 17.13 ± 0.27 |

XPS analysis (Table 4) indicated an increase in surface nitrogen concentration of 75.6%, when compared to the control fiber. This concentration remained unchanged upon prolonged sonication (30 minutes) in methanol, indicating that TAEA was covalently attached to the surface. The composite carbon fiber also contained trace amounts of fluorine and boron from the supporting electrolyte, which was removed by sonication.

Although, the composite carbon fiber exhibited a modest increase in nitrogen content due to the electro-grafting of the TAEA, this increase did not translate into an increase in interlaminar strength as evident from the SBS results shown in Table 4. Accordingly, it can be seen the importance of using an amine-functionalized polymer in order to achieve improvements in interlaminar strength of the laminates.

Examples 6 and 7: *Electro-grafting ofB-PEI-2 onto IM-7 12Kfiber tow and SBS evaluation of laminates prepared with BMI and EPOXY resins.*

In this example, a composite carbon fiber was prepared with B-PEI-2. B-PEI-2 has a weight average molecular weight of approximately 800. The composite carbon fiber was prepared as described in Example 3 and evaluated with XPS. Laminate panels were also prepared with EPOXY and BMI resins, and then evaluated with SBS. The results are summarized in Table 5 below (1 ksi = 6.9 MPa) .

**Table 5: Summary of SBS and XPS Data for Electro-grafting of B-PEI-2**

| Sample No. | Carbon fiber | Bath exposure time (min.) | C (%) | O (%) | N (%) | SBS (ksi) |
|---|---|---|---|---|---|---|
| Control-6 | IM-7 | -- | 83.8 | 11.9 | 4.1 | 18.67 ± 0.85 |
| Example 6 | IM-7 | 1 | 81.5 | 8.8 | 9.3 | 17.33 ± 1.53 |
| Control-7 | IM-7 | -- | 83.8 | 11.9 | 4.1 | 16.69 ± 0.21 |
| Example 7 | IM-7 | 1 | 81.5 | 8.8 | 9.3 | 16.92 ± 0.80 |

XPS analysis from Table 5 showed an increase in surface nitrogen concentration of 126.8% in comparison to the control fiber. This nitrogen concentration increase was smaller in comparison to the electro-grafting of higher molecular weight polymers (see, for example, Example 3 above). The nitrogen concentration remained unchanged upon prolonged sonication (30 minutes) in methanol, indicating that the B-PEI-2 was covalently attached to the surface of the carbon fibers. Grafted fiber also contained trace amounts of fluorine and boron from the supporting electrolyte, which were removed by sonication.

SBS data showed a very slight increase in interlaminar strength for both EPOXY laminate panels (Example 6) and for BMI laminate panels (Example 7) in comparison to the control carbon fiber. From Table 5, it can be seen that the low molecular weight PEI did not statistically improve the interlaminar strength properties of the laminate panels.

Example 8: *Electro-grafting of branched B-PEI-1 onto IMU 12K fiber tow, and SBS evaluation of laminates prepared in BMI resin.*

In the following example, the interlaminar strength property of laminates comprising electro-grafted IMU carbon fiber (untreated 12,000 filament tow) was evaluated. Composite carbon fiber was prepared by passing an IMU carbon fiber through a bath comprising MeOH solution 20 mM in tetraethylammonium tetrafluoroborate supporting electrolyte (S.E.) containing 1.25 wt.% branched B-PEI-1. The composite carbon fibers were evaluated with XPS. Laminate panels were prepared with the composite carbon fiber and BMI resin. The laminate panels were evaluated with SBS. The results are summarized in Table 6 below (1 ksi = 6.9 MPa).

**Table 6 Summary of SBS and XPS Data for Electro-grafting of B-PEI-1**

| Sample No. | Carbon fiber | Bath exposure time (min.) | C (%) | O (%) | N (%) | SBS (ksi) |
|---|---|---|---|---|---|---|
| Control-8 | IMU | -- | 95.8 | 2.0 | 2.2 | - |
| Example 8 | IMU | 1 | 72.0 | 9.2 | 13.1 | 12.54 ± 0.50 |
| Control-9 | IMU | -- | 91.1 | 5.0 | 2.7 | 10.20 ± 0.20 |

The XPS analysis in Table 6 indicated a significant increase in nitrogen concentration, when compared to the carbon fiber of Control-8. In particular, the electro-grafted carbon fiber of Example 8 exhibited an increase in surface nitrogen concentration of 495.5% in comparison to the control carbon fiber. This concentration remained unchanged upon prolonged sonication (30 minutes) in methanol, indicating that B-PEI-1 was covalently attached to the surface of the carbon fiber. The electro-grafted fiber also contained trace amounts of fluorine and boron from the supporting electrolyte, which could be removed by sonication.

In addition, it was observed that the electro-grafted fiber (Example 8) had a rather significant increase in oxygen surface concentration in comparison to previous examples. It is believed that this phenomenon may be due to the presence of water in reagents (especially PEI), which cannot be completely eliminated, even though anhydrous solvent was used and the reactive nature of the IMU fiber surface itself. Also a formation of a small amount of a precipitate of carbon nature was noticed at the end of all IMU runs in electro-treatment bath. This may be the result of several unidentified processes that are simultaneously occurring on the surface of the IMU fiber. Even during blank runs (without PEI or TAEA) some surface etching and surface oxidation appeared to have occurred.

In response, a blank run was prepared in which the bath did not include any polymer (Control-9). The carbon fiber of Control-9 was found to have a somewhat increased amount of oxygen, most likely due to the presence of water during electro-grafting. As a result, it was determined to compare SBS data for Example 8 and Control-9. SBS data for the fiber of Control-8 was not evaluated. As can be seen, the untreated IMU carbon fiber also exhibited improvements in interlaminar strength in comparison to the carbon fiber of Control-9. In this case, the inventive composite carbon fiber exhibited an improvement in SBS of more than almost 23% in comparison to Control-9.

It should be noted that it is difficult to unequivocally interpret the results for the above examples in Table 6 because of the above-described complications. In all cases of IMU-fibers, SBS strengths observed are much lower than those for laminates based on grafted and feed IM-7 fibers (both treated electrochemically by standard methods). This is an interesting observation, because both IM-7 and IMU grafted fibers appeared to have comparable amounts of grafted PEI or TAEA (XPS). This result appears to emphasize the significance of surface topology (roughness) of the fibers.

Comparative Example 6: *Electrografting of TAEA onto IMU 12K fiber tow, and evaluation of Laminates prepared with BMI resin.*

In this example, TAEA was electro-grafted onto an untreated IMU carbon fiber. The resulting composite fiber was used to prepare a laminate with BMI resin. The composite carbon fibers and laminate panels were evaluated with XPS and SBS, respectively. The results are summarized in Table 7 below (1 ksi = 6.9 MPa).

**Table 7: Summary of SBS and XPS Data for Electro-grafting of TAEA**

| Sample No. | Carbon fiber | Bath exposure time (min.) | C (%) | O (%) | N (%) | SBS (ksi) |
|---|---|---|---|---|---|---|
| Control-8 | IMU | -- | 95.8 | 2.0 | 2.2 | -- |
| Comparative Example 6 | IMU | 1 | 88.0 | 5.3 | 6.1 | 11.23 ± 0.54 |
| Control-9 | IMU | 1 | 91.1 | 5.0 | 2.7 | 10.2± 0.20 |

XPS analysis (Table 7) indicated an increase in surface nitrogen concentration of 177.3%, when compared to the control fiber. This concentration remained unchanged upon prolonged sonication (30 minutes) in methanol, indicating that TAEA was covalently attached to the surface. The electro-grafted fiber also contained trace amounts of fluorine and boron from the supporting electrolyte, which were removed by sonication. As in the preceding example, an increase in oxygen surface concentration was noticed for the electro-grafted fiber and therefor a blank (without TAEA in the bath) was prepared. The blank carbon fiber (Control-10) was found to have a somewhat increased amount of oxygen, most likely due to the presence of water during electrografting. SBS evaluation was performed on Comparative Example 6 and Control fiber 9. The results are summarized in Table 7 above. Although TAEA grafted fiber exhibited an SBS increase of 10%, improvements for PEI grafted carbon fibers (Example 8) were much more significant. Both examples (Example 8 and Comparative Example 5) employed same controls.

In the following examples, composited carbon fibers were prepared in which the carbon fibers comprised IM-X carbon fibers. As in the preceding examples, the composite carbon fibers were evaluated with XPS, and laminate panels prepeared therefrom were evaluated with SBS.

Examples 9 and 10: *Electro-grafting of B-PEI-1 onto IM-X untreated, 12Kfiber tow and SBS evaluation of laminates prepared with BMI and EPOXY resins.*

In this example, a composite carbon fiber was prepared with B-PEI-1 and IM-X carbon fiber. The composite carbon fiber was prepared as described in Example 3 and evaluated with XPS. Specifically, a bath comprising MeOH solution 20mM in tetraethylammonium tetrafluoroborate supporting electrolyte (S.E.), and 1.25 wt.% of B-PEI-1 was prepared. The composite carbon fibers were prepared as discussed previously. The fibers were then evaluated with XPS. The results are summarized in Table 8 below. As can be seen in Table 8, the electrografted carbon fiber had an increase in surface N concentration of 53.2% in comparison to the control carbon fiber.

Laminate panels were also prepared with EPOXY (Example 9) and BMI (Example 10) resins, and then evaluated with SBS. The results for the XPS and SBS evaluation are summarized in Table 8 below (1 ksi = 6.9 MPa).

**Table 8: Summary of SBS and XPS Data for Electro-grafting of B-PEI-1 on IM-X**

| Sample No. | Carbon fiber | Bath exposure time (min.) | C (%) | O (%) | N (%) | SBS (ksi) |
|---|---|---|---|---|---|---|
| Control-10 | IM-X | -- | 81.6 | 10.5 | 6.2 | 17.39± 0.30 |
| Example 9 | IM-X | 1 | 79.2 | 9.8 | 9.5 | 19.68 ± 0.26 |
| Control-11 | IM-X | -- | 81.6 | 10.5 | 6.2 | 10.83 ± 0.30 |
| Example 10 | IM-X | 1 | 79.2 | 9.8 | 9.5 | 15.81 ± 0.65 |

For the epoxy-based laminate (Example 9), the SBS results indicated a 12% improvement in interlaminar strength in comparison to a laminate prepared from the Control carbon fiber. The BMI-based laminate (Example 10), exhibited an improvement in interlaminar strength of more than 45.9% in comparison to a laminate prepared from the Control carbon fiber.

Examples 11 and 12: *Aqueous electro-grafting of branched B-PEI-1 onto IM-X untreated, 12Kfiber tow, and evaluation of laminates prepared in EPOXY and BMI resin.*

A bath of an aqueous solution 0.5 M in sodium sulfate supporting electrolyte (S.E.) and 1.25 wt.% branched B-PEI-1 was prepared. The B-PEI-1 was electrografted onto the carbon fiber with the processes and conditions described previously. "Blank run" fibers (Control-13 and Control 15) were also prepared in which the bath did not contain a polymer. The resulting carbon fibers were prepared into laminate panels with EPOXY resin (Example 11) and BMI resin (Example 12). The composite carbon fibers and laminate panels were evaluated with XPS and SBS, respectively, as previously described. The results are summarized in Table 9 below. As can be seen in Table 9, the electro-grafted carbon fiber had an increase in N surface concentration of 106.5% in comparison to the control carbon fiber (Control 12).

**Table 9: Summary of SBS and XPS Data for Electro-grafting of B-PEI-1 on (1 ksi = 6.9 MPa)**

| Sample No. | Carbon fiber | Bath exposure time (min.) | C (%) | O (%) | N (%) | SBS (ksi) |
|---|---|---|---|---|---|---|
| Control-12 | IM-X | -- | 81.6 | 10.5 | 6.2 | 17.39 ± 0.30 |
| Control -13 | IM-X | 1 | 70.6 | 20.8 | 7.4 | 18.61 ± 0.34 |
| Example 11 | IM-X | 1 | 72.3 | 14.4 | 12.8 | 20.19 ± 0.43 |
| Control-14 | IM-X | -- | 81.6 | 10.5 | 6.2 | 10.83 ± 0.30 |
| Control-15 | IM-X | 1 | 70.6 | 20.8 | 7.4 | 15.87 ±0.26 |
| Example 12 | IM-X | 1 | 72.3 | 14.4 | 12.8 | 17.31 ± 0.44 |

Aqueous grafting was somewhat more complicated. Like the IMU (surface untreated) fiber and unlike IM-7 (100% surface treated), IM-X fiber is easy to modify further, which has been revealed by XPS analysis of the "Blank run" fiber (Control 13 and 15). A very significant change in surface chemistry, namely almost a two-fold increase in O concentration was observed. For that reason, just as in case of IMU fibers, a "Blank run" fiber was made for comparison of SBS properties. This addition was justified, as an improvement of SBS properties in laminates based on "Blank run" fiber were observed, when compared to laminates from the feed fiber. It is believed that this result is due to additional surface treatment of the IM-X feed fiber in aqueous Blank conditions. However, it was still observed that fibers grafted with PEI (aqueous) still showed a much more significant increase in SBS properties than the "Blank run" fibers, when compared to the initial IM-X 12K fiber and to each other in both epoxy and BMI composites.

From Table 9, it can be seen that aqueous electro-grafting of *B-PEI-1* onto a carbon fiber results in an increase of 106.5% in nitrogen concentration on the surface of the fibers in comparison to Control-12, as well as, and increase in the interlaminar strength of the laminate panels prepared with the composite carbon fibers. In particular, the EPOXY based laminate panel (Example 11) exhibited an increase in interlaminar strength of greater than 16% in comparison to the Control fiber (Control-12). Similarly, the BMI-based laminate panels (Example 12) exhibited an increase in interlaminar strength of more than 59% in comparison to the Control fiber (Control-14).

Examples 13 and 14: *Electro-grafting of linear PAH onto IM-7 treated, 12Kfiber tow, and evaluation of laminates prepared in EPOXY and BMI resin.*

In this example, electro-grafting using PAH as the amine-functionalized polymer was evaluated. A bath of MEOH solution 20mM in tetraethylammonium tetrafluoroborate supporting electrolyte (S.E.), and 1.25 wt.% of PAH was prepared. PAH was electro-grafted onto IM-7 12,000 filament tow according to the procedure described above. The resulting carbon fibers were prepared into laminate panels with EPOXY and BMI resin. The composite carbon fibers and laminate panels were evaluated with XPS and SBS, respectively, as previously described. The results are summarized in Table 10 below (1 ksi = 6.9 MPa).

**Table 10: Summary of SBS and XPS Data for Electro-grafting of PAH on IM-7**

| Sample No. | Carbon fiber | Bath exposure time (min.) | C (%) | O (%) | N (%) | SBS (ksi) |
|---|---|---|---|---|---|---|
| Control-16 | IM-7 | -- | 83.0 | 10.4 | 6.3 | 17.62 ± 0.31 |
| Example 13 | IM-7 | 1 | 81.3 | 7.6 | 10.1 | 18.64± 0.45 |
| Control-17 | IM-7 | -- | 83.0 | 10.4 | 6.3 | 16.68 ± 0.50 |
| Example 14 | IM-7 | 1 | 81.3 | 7.6 | 10.1 | 18.80 ± 0.45 |

From Table 10, it can be seen that electro-grafting of PAH onto a carbon fiber results in an increase in nitrogen concentration on the surface of the carbon fibers of 60.3% in comparison to the control carbon fiber. In addition, electro-grafting of PAH onto a carbon fiber also resulted in an increase in the interlaminar strength of the laminate panels prepared with the composite carbon fibers. In particular, the EPOXY based laminate panel (Example 13) exhibited an increase in interlaminar strength of greater than 5% in comparison to the Control fiber (Control-16). Similarly, the BMI-based laminate panels (Example 14) exhibited an increase in interlaminar strength of more than 12% in comparison to the Control fiber (Control-17).

Example 15: *Electro-grafting of L-PEI onto IM- 7 12K fiber tow, and evaluation of laminates prepared in EPOXY resin.*

In this example, electro-grafting using L-PEI as the amine-functionalized polymer was evaluated. A bath of MEOH solution 20mM in tetraethylammonium tetrafluoroborate supporting electrolyte (S.E.), and 1.25 wt.% of L-PEI was prepared. L-PEI was electro-grafted onto IM-7 12,000 filament tow according to the procedures described above. The resulting carbon fibers were prepared into laminate panels with EPOXY resin. The composite carbon fibers and laminate panels were evaluated with XPS and SBS, respectively, as previously described. The results are summarized in Table 11 below (1 ksi = 6.9 MPa).

**Table 11: Summary of SBS and XPS Data for Electro-grafting of L-PEI on IM-7**

| Sample No. | Carbon fiber | Bath exposure time (min.) | C (%) | O (%) | N (%) | SBS (ksi) |
|---|---|---|---|---|---|---|
| Control-18 | IM-7 | -- | 83.0 | 10.4 | 6.3 | 17.62 ± 0.31 |
| Example 15 | IM-7 | 1 | 80.7 | 9.1 | 9.8 | 18.82± 0.34 |

From Table 11, it can be seen that electro-grafting of L-PEI onto a carbon fiber results in an increase in nitrogen concentration on the surface of the fibers, as well as, and increase in the interlaminar strength of the laminate panels prepared with the composite carbon fibers. In particular, the electro-grafted carbon fibers exhibited an increase in surface nitrogen concentration of 55.5% in comparison to the control, and the EPOXY based laminate panel (Example 15) exhibited an increase in interlaminar strength of greater than 6% in comparison to the Control fiber (Control-18).

Notably, the polymer had quite a different structure from branched polyethyleneimine (PEI), in that only secondary amine groups were present. Secondary amines were known to electrograft to substrates, but less efficiently than primary amines. Nevertheless, these types of polymers could be grafted onto fibers and a clear improvement of interlaminar properties was observed in the case of an epoxy composite.

Example 16: *Spontaneous grafting of B-PEI-1 onto IM- 7 12Kfiber tow, and evaluation of laminates prepared in EPOXY resin.*

A bath of MEOH solution 20mM in tetraethylammonium tetrafluoroborate supporting electrolyte (S.E.), and 1.25 wt.% of B-PEI-1 was prepared. B-PEI-1was grafted onto IM-7 12,000 filament tow by passing tow through the bath. No voltage was applied to the bath. The resulting carbon fibers were prepared into laminate panels with EPOXY resin. The composite carbon fibers and laminate panels were evaluated with XPS and SBS, respectively, as previously described. The results are summarized in Table 12 below (1 ksi = 6.9 MPa).

**Table 12: Summary of SBS and XPS Data for grafting of B-PEI-1 on IM-7**

| Sample No. | Carbon fiber | Bath exposure time (min.) | C (%) | O (%) | N (%) | SBS (ksi) |
|---|---|---|---|---|---|---|
| Control-19 | IM-7 | -- | 83.0 | 10.4 | 6.3 | 17.62 ± 0.31 |
| Example 16 | IM-7 | 1 | 80.8 | 7.6 | 11.1 | 19.17± 0.36 |

To the surprise of the inventor, XPS analysis indicated a significant increase in surface nitrogen concentration (76.2%), when compared to the control carbon fiber (Control-19). Notably, this concentration increase was comparable to that of the examples in which B-PEI-1, L-PEI and PAH were electro-grafted onto the carbon fibers.

In Example 16, the inventor evaluated the possibility of spontaneous grafting/attachment of amine-containing polymers onto the carbon fiber. It appeared that even without any potential applied to the cell, branched PEI could be attached in significant enough amounts to IM-7 fiber to improve Short Beam Shear strength of the resulting laminate in epoxy resin. It must be noted that, even though no potential was applied to the cell, a potential of 0.7-0.8V was usually measured at fiber (open circuit potential), which could be enough to generate cation radicals, especially in case of PEI, which contained secondary and tertiary amino-groups, which are known to generate radical cations at lower potentials then primary amines (usually 1.5-1.6V range for primary aminogroups). Others have reported that spontaneous grafting of amines is much less efficient than classic electrografting. However, it must be pointed out that only "small" molecules were investigated so far, and that tor "large" polymeric molecules it may not be necessary to form a lot of bonds with the fiber surface to introduce a lot of functionality to the surface. That is why even low-efficiency grafting, as has been shown for secondary amines (Example 15) and spontaneous grafting (Example 16) could be sufficient to introduce enough amine functionality for further reactions with resin matrices and improvement of interlaminar properties.

Example 17: *Grafting ofB-PEI-1 onto HM-63 12Kfiber tow and evaluation of laminates prepared in EPOXY resin.*

In this example, electro-grafting using B-PEI-1 as the amine-functionalized polymer was evaluated. A bath of MEOH solution 20mM in tetraethylammonium tetrafluoroborate supporting electrolyte (S.E.), and 1.25 wt.% of B-PEI-1 was prepared. B-PEI-1 was electrografted onto HM-63 12,000 filament tow according to the procedures described above. The resulting carbon fibers were prepared into laminate panels with EPOXY resin. The composite carbon fibers and laminate panels were evaluated with XPS and SBS, respectively, as previously described. The results are summarized in Table 13 below (1 ksi = 6.9 MPa).

**Table 13: Summary of SBS and XPS Data for Electro-grafting of B-PEI-1 on HM-63**

| Sample No. | Carbon fiber | Bath exposure time (min.) | C (%) | O (%) | N (%) | SBS (ksi) |
|---|---|---|---|---|---|---|
| Control-20 | HM-63 | -- | 94.9 | 4.4 | 0.2 | 11.9 ± 0.45 |
| Example 17 | HM-63 | 1 | 87.5 | 4.9 | 6.0 | 12.59 ± 0.23 |

From Table 13, it can be seen that electro-grafting of B-PEI-1onto a carbon fiber results in an increase in nitrogen concentration on the surface of the fibers, as well as, and increase in the interlaminar strength of the laminate panels prepared with the composite carbon fibers. In particular, the electro-grafted carbon fiber exhibited an increase in surface nitrogen concentration of 2,900%, and the EPOXY based laminate panel (Example 17) exhibited an increase in interlaminar strength of greater than 5% in comparison to the Control fiber (Control-20).

## Claims

1. A composite carbon fiber comprising a carbon fiber having an amine-functionalized polymer electro-grafted onto a surface thereof.

2. The composite carbon fiber of claim 1, wherein the composite carbon fiber has a nitrogen/carbon (N/C) ratio that is at least 0.125, preferably at least 0.150, and more preferably from about 0.15 to 0.3, and even more preferably from about 0.15 to 0.2.

3. The composite carbon fiber of any one or more of the preceding claims, wherein the composite carbon fiber exhibits an increase in nitrogen surface concentration that is at least 50%, at least 75%, at least 100%, at least 125%, at least 150%, at least 175%, at least 200%, at least 250%, and/or at least 495% in comparison to the original carbon fiber that does not include an amine-functionalized polymer electro-grafted onto the surface of the carbon fiber.

4. The composite carbon fiber of any one or more of the preceding claims, wherein the composite carbon fiber exhibits an increase in nitrogen surface concentration that is from 50 to 500%, and in particular from about 100 to 500%, from 150 to 500%, from 200 to 500%, from 100 to 250%, and/or from 125 to 200% in comparison to the original carbon fiber that does not include an amine-functionalized polymer electro-grafted onto the surface of the carbon fiber.

5. The composite carbon fiber of any one or more of the preceding claims, wherein the amine-functionalized polymer is selected from the group consisting of linear polyethyleneimines (PEI), branched polyethyleneimines (PEI), branched polypropyleneimine, linear poly(allylamine) (PAA), polyamidoamine (PAMAM) dendrimer, branched poly(allylamine) prepared by branching of poly(allylamine) with divinylbenzene (PAADVB), and block-copolymers, core-shell particles, and combinations thereof, preferably wherein the amine-functionalized polymer comprises a branched polyethyleneimine.

6. The composite carbon fiber of any one or more of the preceding claims, wherein the carbon fiber has a tensile strength (as measured according to ASTM D-4018) of at least 2757.9 Mpa (400 ksi), such as a tensile strength from 4136.8 to 7279.5 Mpa (600 to 1,050 ksi); and/or wherein the amine-functionalized polymer has a weight average molecular weight ranging from 5,000 to 35,000.

7. A fiber reinforced composite comprising the composite carbon fiber of any one or more of the preceding claims; preferably wherein the fiber reinforced composite comprises a resin matrix infused into the carbon fiber more preferably wherein the fiber reinforced composite exhibits an interlaminar strength of 117.2 to 172.4 Mpa (17 to 25 ksi), and in particular from 137.9 to 151.7 Mpa (20 to 22 ksi), as **characterized by** Short Beam Shear (SBS) testing (in accordance with ASTM D-2344).

8. The fiber reinforced composite of claim 7, wherein the resin is selected from the group consisting of epoxy based resins, bismaleimide based resins, cyanate ester based resins, and phenolic based resins.

9. The fiber reinforced composite of any one of claims 7 or 8, wherein the fiber reinforced composite exhibits an increase in SBS ranging from 5 to 25% in comparison to a similar fiber reinforced composite in which the carbon fibers are identical with the exception that the surfaces of the carbon fibers do not include an amine-functionalized polymer; and/or wherein a surface of the composite carbon fiber has a nitrogen/carbon (N/C) ratio that is from 0.15 to 0.3 (as determined by X-ray photoelectron spectroscopy).

10. The fiber reinforced composite of any one of claims 8 or 9, wherein the carbon fiber has a tensile strength from 4136.8 to 7239.5 MPa (600 to 1,050 ksi); and/or wherein the amine-functionalized polymer is selected from the group consisting of linear polyethyleneimines (PEI), branched polyethyleneimines (PEI), branched polypropyleneimine, linear poly(allylamine) (PAA), polyamidoamine (PAMAM) dendrimer, branched poly(allylamine) prepared by branching of poly(allylamine) with divinylbenzene (PAADVB), and a combination thereof.

11. A method of preparing a composite carbon fiber according to any one of claims 1 to 6, the method comprising:
passing a carbon fiber through a bath comprising an amine-functionalized polymer;
applying an electro-potential to the cell;
electro-grafting the amine-functionalized polymer onto the carbon fiber to produce a composite carbon fiber having an amine-functionalized polymer electro-grafted onto a surface thereof.

12. The method of claim 11, wherein the composite carbon fiber exhibits a carbon/nitrogen (N/C) ratio that is from 0.15 to 0.3, such as from 0.15 to 0.2, and from 0.165 to 0.195.

13. The method of any one or more of claims 11 or 12, wherein the amine-functionalized polymer is selected from the group consisting of linear polyethyleneimines (PEI), branched polyethyleneimines (PEI), branched polypropyleneimine, linear poly(allylamine) (PAA), polyamidoamine (PAMAM) dendrimer, branched poly(allylamine) prepared by branching of poly(allylamine) with divinylbenzene (PAADVB), and a combination thereof.

14. The method of any one or more of claims 11 to 13, wherein the step of electrografting the amine-functionalized polymer onto the carbon fiber lasts for a period of time between 30 seconds and two minutes, and in particular, for a period of time between 45 seconds and 90 seconds.

## Patentansprüche

1. Verbundkohlenstofffaser, umfassend eine Kohlenstofffaser, die ein aminfunktionalisiertes Polymer aufweist, das auf eine Oberflächen davon elektrogepfropft ist.

2. Verbundkohlenstofffaser nach Anspruch 1, wobei die Verbundkohlenstofffaser ein Stickstoff/Kohlenstoff(N/C)-Verhältnis von mindestens 0,125, bevorzugt mindestens 0,150 und bevorzugter von etwa 0,15 bis 0,3 und noch bevorzugter von etwa 0,15 bis 0,2 aufweist.

3. Verbundkohlenstofffaser nach einem oder mehreren der vorhergehenden Ansprüche, wobei die Verbundkohlenstofffaser einen Anstieg der Stickstoffoberflächenkonzentration von mindestens 50 %, mindestens 75 %, mindestens 100 %, mindestens 125 % mindestens 150 %, mindestens 175 %, mindestens 200 %, mindestens 250 % und/oder mindestens 495 % im Vergleich zur ursprünglichen Kohlenstofffaser, die kein aminfunktionalisiertes Polymer enthält, das auf die Oberfläche der Kohlenstofffaser elektrogepfropft ist, zeigt.

4. Verbundkohlenstofffaser nach einem oder mehreren der vorhergehenden Ansprüche, wobei die Verbundkohlenstofffaser einen Anstieg der Stickstoffoberflächenkonzentration von 50 bis 500 % und insbesondere von etwa 100 bis 500 %, von 150 bis 500 %, von 200 bis 500 %, von 100 bis 250 % und/oder von 125 bis 200 % im Vergleich zur ursprünglichen Kohlenstofffaser, die kein aminfunktionalisiertes Polymer enthält, das auf die Oberfläche der Kohlenstofffaser elektrogepfropft ist, zeigt.

5. Verbundkohlenstofffaser nach einem oder mehreren der vorhergehenden Ansprüche, wobei das aminfunktionalisierte Polymer aus der Gruppe ausgewählt ist, die aus linearen Polyethyleniminen (PEI), verzweigten Polyethyleniminen (PEI), verzweigtem Polypropylenimin, linearem Poly(allylamin) (PAA), Polyamidoamin(PAMAM)-Dendrimer, verzweigtem Poly(allylamin), hergestellt durch Verzweigung von Poly(allylamin) mit Divinylbenzol (PAADVB), und Blockcopolymeren, Kern-Schale-Partikeln und Kombinationen davon besteht, wobei bevorzugt das aminfunktionalisierte Polymer ein verzweigtes Polyethylenimin umfasst.

6. Verbundkohlenstofffaser nach einem oder mehreren der vorhergehenden Ansprüche, wobei die Kohlenstofffaser eine Zugfestigkeit (gemessen gemäß ASTM D-4018) von mindestens 2757,9 MPa (400 ksi) aufweist, wie etwa eine Zugfestigkeit von 4136,8 bis 7279,5 MPa (600 bis 1.050 ksi); und/oder wobei das aminfunktionalisierte Polymer ein gewichtsmittleres Molekulargewicht im Bereich von 5.000 bis 35.000 aufweist.

7. Faserverstärkter Verbundstoff, umfassend die Verbundkohlenstofffaser nach einem oder mehreren der vorhergehenden Ansprüche; wobei bevorzugt der faserverstärkte Verbundstoff eine in die Kohlenstofffaser infundierte Harzmatrix umfasst, bevorzugter wobei der faserverstärkte Verbundstoff eine interlaminare Festigkeit von 117,2 bis 172,4 MPa (17 bis 25 ksi) und insbesondere von 137,9 bis 151,7 MPa (20 bis 22 ksi), wie durch Short-Beam-Shear(SBS)-Test (gemäß ASTM D-2344) gekennzeichnet, zeigt.

8. Faserverstärkter Verbundstoff nach Anspruch 7, wobei das Harz aus der Gruppe ausgewählt ist, die aus Harzen auf Epoxidbasis, Harzen auf Bismaleimidbasis, Harzen auf Cyanatesterbasis und Harzen auf Phenolbasis besteht.

9. Faserverstärkter Verbundstoff nach einem der Ansprüche 7 oder 8, wobei der faserverstärkte Verbundstoff im Vergleich zu einem ähnlichen faserverstärkten Verbundstoff, bei dem die Kohlenstofffasern identisch sind mit der Ausnahme, dass die Oberflächen der Kohlenstofffasern kein aminfunktionalisiertes Polymer enthalten, einen Anstieg des SBS im Bereich von 5 bis 25 % zeigt; und/oder wobei eine Oberfläche der Verbundkohlenstofffaser ein Stickstoff/Kohlenstoff(N/C)-Verhältnis von 0,15 bis 0,3 aufweist (bestimmt durch Röntgen-Photoelektronenspektroskopie).

10. Faserverstärkter Verbundwerkstoff nach einem der Ansprüche 8 oder 9, wobei die Kohlenstofffaser eine Zugfestigkeit von 4136,8 bis 7239,5 MPa (600 bis 1.050 ksi) aufweist; und/oder wobei das aminfunktionalisierte Polymer aus der Gruppe ausgewählt ist, die aus linearen Polyethyleniminen (PEI), verzweigten Polyethyleniminen (PEI), verzweigtem Polypropylenimin, linearem Poly(allylamin) (PAA), Polyamidoamin(PAMAM)-Dendrimer, verzweigtem Poly(allylamin), hergestellt durch Verzweigung von Poly(allylamin) mit Divinylbenzol (PAADVB) und einer Kombination davon besteht.

11. Verfahren zum Herstellen einer Verbundkohlenstofffaser nach einem der Ansprüche 1 bis 6, wobei das Verfahren Folgendes umfasst:
Führen einer Kohlenstofffaser durch ein Bad, das ein aminfunktionalisiertes Polymer umfasst;
Anlegen eines Elektropotentials an die Zelle;
Elektropfropfen des aminfunktionalisierten Polymers auf die Kohlenstofffaser, um eine Verbundkohlenstofffaser herzustellen, die ein aminfunktionalisiertes Polymer aufweist, das auf eine Oberfläche davon elektrogepfropft ist.

12. Verfahren nach Anspruch 11, wobei die Verbundkohlenstofffaser ein Kohlenstoff/Stickstoff(N/C)-Verhältnis von 0,15 bis 0,3, wie etwa von 0,15 bis 0,2 und von 0,165 bis 0,195 zeigt.

13. Verfahren nach einem oder mehreren der Ansprüche 11 oder 12, wobei das aminfunktionalisierte Polymer aus der Gruppe ausgewählt ist, die aus linearen Polyethyleniminen (PEI), verzweigten Polyethyleniminen (PEI), verzweigtem Polypropylenimin, linearem Poly(allylamin) (PAA), Polyamidoamin(PAMAM)-Dendrimer, verzweigtem Poly(allylamin), hergestellt durch Verzweigung von Poly(allylamin) mit Divinylbenzol (PAADVB) und einer Kombination davon besteht.

14. Verfahren nach einem oder mehreren der Ansprüche 11 bis 13, wobei der Schritt des Elektropfropfens des aminfunktionalisierten Polymers auf die Kohlenstofffaser für einen Zeitraum zwischen 30 Sekunden und zwei Minuten und insbesondere für einen Zeitraum zwischen 45 Sekunden und 90 Sekunden dauert.

## Revendications

1. Fibre de carbone composite comprenant une fibre de carbone comportant un polymère à fonction amine électro-greffé sur une surface de celle-ci.

2. Fibre de carbone composite selon la revendication 1, dans laquelle la fibre de carbone composite comporte un rapport azote/carbone (N/C) qui est d'au moins 0,125, de préférence d'au moins 0,150, et plus préférablement d'environ 0,15 à 0,3, et encore plus préférablement d'environ 0,15 à 0,2.

3. Fibre de carbone composite selon l'une quelconque ou plusieurs des revendications précédentes, dans laquelle la fibre de carbone composite présente une augmentation de la concentration superficielle d'azote qui est d'au moins 50 %, au moins 75 %, au moins 100 %, au moins 125 %, au moins 150 %, au moins 175 %, au moins 200 %, au moins 250 % et/ou au moins 495 % par rapport à la fibre de carbone d'origine qui ne comprend pas de polymère à fonction amine électro-greffé à la surface de la fibre de carbone.

4. Fibre de carbone composite selon l'une quelconque ou plusieurs des revendications précédentes, dans laquelle la fibre de carbone composite présente une augmentation de la concentration superficielle d'azote qui est de 50 à 500 %, et en particulier d'environ 100 à 500 %, de 150 à 500 %, de 200 à 500 %, de 100 à 250 %, et/ou de 125 à 200 % par rapport à la fibre de carbone d'origine qui ne comprend pas de polymère à fonction amine électro-greffé à la surface de la fibre de carbone.

5. Fibre de carbone composite selon l'une quelconque ou plusieurs des revendications précédentes, dans laquelle le polymère à fonction amine est choisi dans le groupe constitué de polyéthylèneimines linéaires (PEI), polyéthylèneimines ramifiées (PEI), polypropylèneimine ramifiée, poly(allylamine) linéaire (PAA), dendrimère de polyamidoamine (PAMAM), poly(allylamine) ramifiée préparée par ramification de poly(allylamine) avec du divinylbenzène (PAADVB), et des copolymères à blocs, des particules noyau-enveloppe et leurs combinaisons, de préférence dans lequel le polymère à fonction amine comprend une polyéthylèneimine ramifiée.

6. Fibre de carbone composite selon l'une quelconque ou plusieurs des revendications précédentes, dans laquelle la fibre de carbone comporte une résistance à la traction (telle que mesurée selon la norme ASTM D-4018) d'au moins 2757,9 MPa (400 ksi), telle qu'une résistance à la traction de 4136,8 à 7279,5 MPa (600 à 1050 ksi) ; et/ou dans lequel le polymère à fonction amine comporte un poids moléculaire moyen en poids allant de 5 000 à 35 000.

7. Composite renforcé de fibres comprenant la fibre de carbone composite selon l'une quelconque ou plusieurs des revendications précédentes ; de préférence dans lequel le composite renforcé de fibres comprend une matrice de résine infusée dans la fibre de carbone, plus préférablement dans lequel le composite renforcé de fibres présente une résistance interlaminaire de 117,2 à 172,4 MPa (17 à 25 ksi), et en particulier de 137,9 à 151,7 MPa (20 à 22 ksi), telle que **caractérisée par** un test de cisaillement à faisceau court (SBS) (conformément à la norme ASTM D-2344).

8. Composite renforcé de fibres selon la revendication 7, dans lequel la résine est choisie dans le groupe constitué de résines à base d'époxy, résines à base de bismaléimide, résines à base d'ester cyanate et résines à base phénolique.

9. Composite renforcé de fibres selon l'une quelconque des revendications 7 ou 8, dans lequel le composite renforcé de fibres présente une augmentation de SBS allant de 5 à 25 % par rapport à un composite renforcé de fibres similaire dans lequel les fibres de carbone sont identiques à l'exception du fait que les surfaces des fibres de carbone ne comprennent pas de polymère à fonction amine ; et/ou dans lequel une surface de la fibre de carbone composite comporte un rapport azote/carbone (N/C) qui est de 0,15 à 0,3 (tel que déterminé par spectroscopie photoélectronique à rayons X).

10. Composite renforcé de fibres selon l'une quelconque des revendications 8 ou 9, dans lequel la fibre de carbone comporte une résistance à la traction de 4136,8 à 7239,5 MPa (600 à 1050 ksi) ; et/ou dans lequel le polymère à fonction amine est choisi dans le groupe constitué par les polyéthylèneimines linéaires (PEI), polyéthylèneimines ramifiées (PEI), polypropylèneimines ramifiées, poly(allylamine) linéaire (PAA), dendrimère de polyamidoamine (PAMAM), poly(allylamine) ramifiée préparée par ramification de poly(allylamine) avec du divinylbenzène (PAADVB), et leur combinaison.

11. Procédé de préparation d'une fibre de carbone composite selon l'une quelconque des revendications 1 à 6, le procédé comprenant :
le passage d'une fibre de carbone dans un bain comprenant un polymère à fonction amine ;
l'application d'un électropotentiel à la cellule ;
l'électro-greffage du polymère à fonction amine sur la fibre de carbone pour produire une fibre de carbone composite comportant un polymère à fonction amine électro-greffé sur une surface de celle-ci.

12. Procédé selon la revendication 11, dans lequel la fibre de carbone composite présente un rapport carbone/azote (N/C) qui est de 0,15 à 0,3, tel que de 0,15 à 0,2, et de 0,165 à 0,195.

13. Procédé selon l'une quelconque ou plusieurs des revendications 11 ou 12, dans lequel le polymère à fonction amine est choisi dans le groupe constitué des polyéthylèneimines linéaires (PEI), polyéthylèneimines ramifiées (PEI), polypropylèneimine ramifiée, poly(allylamine) linéaire (PAA), dendrimère de polyamidoamine (PAMAM), poly(allylamine) ramifiée préparée par ramification de poly(allylamine) avec du divinylbenzène (PAADVB), et leur combinaison.

14. Procédé selon l'une quelconque ou plusieurs des revendications 11 à 13, dans lequel l'étape d'électro-greffage du polymère à fonction amine sur la fibre de carbone dure pendant une période de temps comprise entre 30 secondes et deux minutes, et en particulier, pendant une période de temps comprise entre 45 secondes et 90 secondes.
